(19) Europäisches Patentamt
European Patent Office
Office européen des brevets

(11) Veröffentlichungsnummer: **0 051 804**
**A1**

# (12) EUROPÄISCHE PATENTANMELDUNG

(21) Anmeldenummer: **81109099.2**

(22) Anmeldetag: **28.10.81**

(51) Int. Cl.³: **C 01 B 21/098**, C 07 F 9/65

(30) Priorität: **07.11.80 DE 3042061**

(43) Veröffentlichungstag der Anmeldung: **19.05.82**
**Patentblatt 82/20**

(84) Benannte Vertragsstaaten: **DE FR GB IT**

(71) Anmelder: **HOECHST AKTIENGESELLSCHAFT,**
**Postfach 80 03 20, D-6230 Frankfurt/Main 80 (DE)**

(72) Erfinder: **Rieck, Hans-Peter, Dr.,**
**Freiherr-vom-Stein-Strasse 37, D-6233 Kelkheim (Taunus) (DE)**
Erfinder: **Wegel, Siegfried, Dr., Göthsbachstrasse 3, D-6100 Darmstadt (DE)**

## (54) Verfahren zur Herstellung cyclischer Phosphazene.

(57) Cyclische Phosphazene der allgemeinen Formel

$$-(N{=}PClR)_n$$

in der R Chlor, eine $C_1$- bis $C_6$-Alkylgruppe oder eine Phenylgruppe und n eine ganze Zahl zwischen 3 und 8 bedeutet, lassen sich herstellen durch Umsetzen von Verbindungen der Formel $RPCl_4$ mit einer Suspension von Ammoniumchlorid in einem heißen inerten Lösungsmittel. Diese Suspension wird gewonnen durch Einleiten von Chlorwasserstoff und Ammoniak in das Lösungsmittel. Die Zugabe der Verbindung $RPCl_4$ und der Suspension von Ammoniumchlorid erfolgt nach Maßgabe des Verbrauchs an $RPCl_4$.

EP 0 051 804 A1

0051804

HOECHST AKTIENGESELLSCHAFT HOE 80/F 257 Dr. SP/Rt

# Verfahren zur Herstellung cyclischer Phosphazene

Die vorliegende Erfindung betrifft ein verbessertes Verfahren zur Herstellung cyclischer Chlor-Phosphazene aus Halogenverbindungen des 5-werigen Phosphors und Ammoniumchlorid.

Cyclische Chlor enthaltende Phosphazene der Formel

$$-\!\!\left(N = PClR\right)_{n}\!\!- \qquad \text{mit } n = 3 - 8$$

sind Ausgangsverbindungen (R = Aryl oder Alkyl) zur Herstellung von Alkylalkoxy- und Arylalkoxy-Phosphazenen, die als Flammschutzmittel verwendet werden können. Dichlorphosphazene (R = Chlor) sind Ausgangsverbindungen zur Herstellung analoger Dialkoxyphosphazene oder von polymerenBis-Perfluoralkoxy-Phosphazenen, welche sich durch gute Tieftemperatur-Elastizität auszeichnen.

Cyclische Chlor enthaltende Phosphazene werden meist durch Umsetzung von Phosphorpentachlorid, Alkyltetrachlorphosphoran oder Aryltetrachlorphosphoran mit Ammoniak bzw. Ammoniumchlorid gemäß folgenden Gleichungen hergestellt:

$$n\ RPCl_4 + n\,NH_3 \longrightarrow -\!\!\left(N = PClR\right)_{n}\!\!- \quad + 3n\ HCl$$

$$n\ RPCL_4 + n\,NH_4Cl \longrightarrow -\!\!\left(N = PClR\right)_{n}\!\!- \quad + 4n\ HCl$$

Die Reaktion wird meist in einem chlorierten organischen Lösungsmittel bei Temperaturen von 100 bis 150°C durchgeführt und erfordert üblicherweise Reaktionszeiten von mehreren Stunden. Neben den gewünschten cyclischen Phosphazenen werden dabei im allgemeinen auch polymere (lineare) Phosphazene gebildet, die nicht nur die Ausbeute an cyclischem Produkt vermindern, sondern auch die Aufarbeitung des Rohproduktes erschweren. Zur Verminderung des Polymeren Anteils und zur Erhöhung des Anteils an (cyclischen) Phosphazenen können verschiedene Maßnahmen getroffen werden:

Die Bildung von linearen polymeren Dichlorphosphazenen wird zurückgedrängt, wenn ein großer Überschuß an Ammoniumchlorid verwendet wird.
Ebenso führt eine niedrige Konzentration an Phosphorpentachlorid im Reaktionsgemisch zu einer Verminderung des Anteils an linearen, polymeren Dichlorphosphazenen. Dies kann erreicht werden durch Zugabe einer großen Menge Lösungsmittel oder auch dadurch, daß Phosphorpentachlorid bzw. Phosphortrichlorid zusammen mit Chlor, allmählich während der Reaktion zugesetzt werden (US-PS 36 67 922, US-PS 3 407 047, US-PS 366 7992). Entsprechende Verfahren sind auch zur Herstellung von Alkylchlorphosphazenen (DE-OS 2 940 389) oder Arylchlorphosphazenen (GB-PS 992 377, 102 3415, US-PS 3 234 273, GB-PS 1 026 369 bekannt geworden. Auch eine gleichzeitige kontinuierliche Zugabe von Phosphorpentachlorid und festem Ammoniumchlorid oder Ammoniak
(US-PS 4 046 857) ist beschrieben worden.

Die Reaktionsgeschwindigkeit der Umsetzung von Phosphorpentachlorid oder Tetrachlorphosphoranen mit Ammoniumchlorid wird vor allem von der Reaktionstemperatur beeinflußt. Jedoch übt auch die Korngröße des Ammoniumchlorids einen starken Einfluß aus. Man vermahlt deshalb im allgemeinen das Ammoniumchlorid fein, um eine möglichst große Oberfläche zu erzielen. Ferner ist die Verwendung von sehr feinteiligem Ammoniumchlorid bekannt, das durch Einleiten von Ammoniak und Chlorwasserstoff in das verwendete Lösungsmittel gebildet wird (GB-PS 992 377, 1 026 369, US-PS 3 367 750, US-PS 3 860 693 und DE-OS 2 940389. Bei diesen Verfahren wird also zunächst das gesamte Ammoniumchlorid hergestellt, im Reaktionsgefäß vorgelegt und erst anschließend mit $RPCl_4$ oder $PCl_5$ umgesetzt.

Weiterhin ist bekannt, daß eine Reihe von Metallsalzen, die beispielsweise in der US-PS 3 407 047 oder in der US-PS 4 248 845 beschrieben werden, die Umsetzung von $PCl_5$ mit Ammoniumchlorid zu beschleunigen vermögen. Jedoch sind auch bei Verwendung dieser Katalysatoren noch Reaktionszeiten von mehreren Stunden erforderlich.

Es bestand daher die Aufgabe die bisher notwendigen Reaktionszeiten zu verkürzen.

Es wurde nun ein Verfahren zur Herstellung cyclischer Phosphazene der allgemeinen Formel

$$-\!\!(-N = PClR-)_n\!\!-$$

gefunden, in der R Chlor, eine $C_1$- bis $C_6$-Alkylgruppe oder eine Phenylgruppe und n eine ganze Zahl zwischen 3 und 8 bedeutet, durch Umsetzung von Verbindungen der Formel $RPCl_4$, in der R die oben angegebene Bedeutung hat, mit einer Suspension von Ammoniumchlorid in einem heißen inerten organischen Lösungsmittel in einem Reaktor, wobei die Suspension von Ammoniumchlorid durch Einleiten von Chlorwasserstoff und Ammoniak in das für die Reaktion benutzte Lösungsmittel gewonnen wird und die Zugabe der Verbindung $RPCl_4$ in den Reaktor nach Maßgabe des Verbrauchs erfolgt, und das dadurch gekennzeichnet ist, daß die Suspension von Ammoniumchlorid nach Maßgabe des Verbrauchs von $RPCl_4$ in den Reaktor eingeleitet wird.

Die Erfindung beruht auf der Erkenntnis, daß die in der Suspension vorhandenen sehr feinteiligen Ammoniumchlorid-Kristalle, die teilweise eine Größe unter 5 Mikron haben, langsam bei Raumtemperatur und schneller bei erhöhter Temperatur agglomerieren, wodurch die spezifische Oberfläche der Kristalle und damit die Reaktionsgeschwindigkeit abnimmt. Es ist daher als überraschender Vorteil des erfindungsgemäßen Verfahrens anzusehen, daß die Reaktionszeit der Umsetzung von Phosphorpentachlorid oder Alkyl- bzw. Aryltetrachlorphosphoran mit Ammoniumchlorid wesentlich reduziert werden kann.

Die Zugabe des Ammoniumchlorids nach Maßgabe des Verbrauchs der Verbindung $RPCl_4$ wird vorzugsweise so vorgenommen, daß zu jedem Zeitpunkt die insgesamt zugegebene molare Menge an Ammoniumchlorid mindestens das 1,0-fache der insgesamt zugegebenen molaren Menge an $RPCl_4$ beträgt und innerhalb eines beliebigen Zeitabschnittes, in dem ein Viertel der Gesamtmenge an $RPCl_4$ zugegeben wird, das Molverhältnis der in diesem Zeitabschnitt zugegebenen Mengen an Ammoniumchlorid und $RPCl_4$ nicht unter 0.5:1 liegt. Es ist dabei vorteilhaft, wenn das $RPCl_4$ möglichst stetig zugegeben wird. Ein größerer Überschuß an Ammoniumchlorid bezogen auf die Verbindung $RPCl_4$ ist möglich, aber nicht nötig. In den meisten Fällen wird es daher ausreichend sein, wenn innerhalb eines beliebigen Zeitabschnitts, in dem ein Viertel der Gesamtmenge an $RPCl_4$ zugegeben wird, das Molverhältnis der in diesem Zeitabschnitt zugegebenen Mengen an Ammoniumchlorid und $RPCl_4$ nicht über 3,0:1 liegt.

Bevorzugte inerte organische Lösungsmittel sind chlorierte Kohlenwasserstoffe, z.B. aliphatische Chlorkohlenwasserstoffe wie Tetrachlorethan oder aromatische Chlorkohlenwasserstoffe wie Chlorbenzol. Die Suspension von Ammoniumchlorid wird möglichst bald nach ihrer Bildung kontinuierlich oder zumindest portionsweise in die heiße Reaktionszone, wo die Umsetzung mit $RPCl_4$ stattfindet, eingeleitet. Die Verweilzeit der Ammoniumchlorid-Kristalle in der heißen Reaktionszone ist dabei möglichst kurz.

Das $RPCl_4$ kann in fester Form (z.B. im Fall von Phosphorpentachlorid), als Suspension oder als Lösung direkt in die Reaktionszone eingeführt werden. Es wird jedoch im allgemeinen bevorzugt, $RPCl_4$ bei niedriger Temperatur mit der Ammoniumchlorid-Suspension gut zu durchmischen und dann diese (möglichst ständig gerührte) Suspension in den heißen Reaktor einzuleiten. Bei niedriger Temperatur, z.B. bei Raumtemperatur, findet kaum eine Reaktion in dem Gemisch statt. Durch die angegebene Vorvermischung läßt sich jedoch erreichen, daß zu jedem Zeitpunkt das Molverhältnis von zuge-

gebenem Ammoniumchlorid zu zugegebenem $RPCl_4$ konstant ist und keine hohen Konzentrationen an $RPCl_4$ in der heißen Reaktionszone auftreten. Bei Vorvermischung mit $RPCl_4$ soll die Temperatur der Suspension unter 90°C, vorzugsweise unter 70°C liegen. Bei Abwesenheit von $RPCl_4$ soll die Temperatur der Suspension bei 20 - 150°C, insbesondere 20 - 80°C, liegen. Je geringer die Verweilzeit einer $RPCl_4$ enthaltenden Suspension außerhalb des eigentlichen heißen Reaktors ist, umso ausschließlicher wird die Umsetzung von $RPCl_4$ mit $NH_4Cl$ in diesem stattfinden.

Bei kontinuierlicher Arbeitsweise in einem Rührkessel ist es bevorzugt, die Entfernung des Reaktionsgemisches so durchzuführen, daß das Verhältnis $NH_4Cl/RPCl_4$ in dem verbleibenden Reaktionsgemisch möglichst groß ist. Beispielsweise kann man bevorzugt die flüssige Phase des Reaktionsgemisches über Fritten oder einen Überlauf entfernen, so daß bevorzugt Ammoniumchlorid in der heißen Reaktionszone zurückbleibt.

Wegen der hohen Reaktionsgeschwindigkeit des Ammoniumchlorids werden größere Konzentrationen an $RPCl_4$ vermieden; dadurch ist der Anteil an gewünschtem cyclischem Phosphazen stark erhöht und die Bildung von polymeren Phosphazen zurückgedrängt oder ganz verhindert. Bei Verweilzeiten von weniger als einer Stunde werden Ausbeuten, bezogen auf eingesetztes $RPCl_4$, von mehr als 90% erzielt. Es läßt sich durch die Entfärbung der $RPCl_4$-Lösung beobachten, daß die Reaktion unter geeigneten Bedingungen innerhalb weniger Sekunden abläuft. Falls die Ausgangskomponenten in Portionen oder kontinuierlich zugeführt werden und das Reaktionsgemisch kontinuierlich abgezogen wird, soll die mittlere Verweilzeit des Reaktionsgemisches in der heißen Reaktioszone unter 3 Stunden, insbesondere unter 1.5 Stunden liegen.

Die Reaktionstemperatur sollte möglichst hoch liegen. In der Praxis wird man darauf achten, daß auch bei Zulauf der $RPCl_4/NH_4Cl$- oder $NH_4Cl$-Suspension ein vorgegebener Tem-

peratur-Sollwert nicht unterschritten wird. Als günstig erweisen sich Reaktionstemperaturen von 100 - 135°C, insbesondere 115 - 130°C.
Vorteilhafterweise wird die Reaktion so durchgeführt, daß das Reaktionsgemisch unter Rückfluß kocht. Dadurch wird erreicht, daß ein möglichst großer Teil des gebildeten Chlorwasserstoffs unmittelbar nach seiner Entstehung aus der Lösung entfernt wird. Durch die Freisetzung des Chlorwasserstoffs wird gleichzeitig die Rückflußtemperatur herabgesetzt. Die Reaktionstemperatur ist in der Hauptsache abhängig vom verwendeten Lösungsmittel, daneben von der Konzentration der Reaktionspartner, von der Reaktionsgeschwindigkeit und der Intensität der Außenbeheizung. Wegen der hohen Reaktionsgeschwindigkeit sind nur relativ kleine Reaktionsvolumina notwendig. Es ist möglich bei Chargenbetrieb die Reaktion in nur einem Reaktor, z.B. einem Rührkessel, mit einer mittleren Verweilzeit von weniger als 1/2 Stunde durchzuführen; zur Erhöhung des Umsatzes an $RPCl_4$ ist jeodch eine etwas längere Verweilzeit und eine Apparatur mit geringer Rückvermischung, wie z.B. eine Kaskade, die durch Hintereinanderschalten von zwei Rührkesseln erhalten wird, bevorzugt.
Es kann von Vorteil sein, wenn bei einer Kaskade von Reaktoren, bei der jeweils die Reaktionsmischung unter Rückfluß kocht, das kondensierende Lösungsmittel dem ersten heißen Reaktor oder der noch kalten, in den ersten Reaktor zulaufenden, Suspension (an $NH_4Cl$ oder $NH_4Cl/RPCl_4$) zugeführt wird. Auf diese Weise wird erreicht, daß im ersten heißen Reaktor durch eine Vergrößerung der Lösungsmittelmenge die Konzentration an $RPCl_4$ weiter vermindert wird und die Konzentration an Chlorphosphazen in den gegebenenfalls nachgeschalteten Reaktionsgefäßen erhöht wird. Damit wird erreicht, daß bei gleicher Produktzusammensetzung in den ersten Reaktor eine an $RPCl_4$ reichere Suspension eingeleitet und somit die Menge des umlaufenden Lösungsmittels vermindert werden kann.

Auch ein Abdestillieren eines Teils des Lösungsmittels aus dem Reaktionsgefäß ist möglich. Das erfindungsgemäße Verfahren kann auch in Gegenwart von katalytisch wirkenden Metallchloriden oder Metalloxyden, die z.B. in US-PS 3 407 047 oder in US-PS 4 248 845 beschrieben sind, durchgeführt werden. Bevorzugt ist die Verwendung eines Metallchlorids der zweiten oder vierten Haupt- oder Nebengruppe, der dritten Hauptgruppe oder der achten Nebengruppe des periodischen Systems in einer Menge von 0,01 bis 10 Gew.-% der Suspension.

Das erfindungsgemäße Verfahren kann diskontinuierlich durchgeführt werden, indem ein Reaktionsbehälter durch allmähliches Zudosieren von Ammoniumchlorid-Suspension und $RPCl_4$ mit Reaktionsprodukt gefüllt wird. Das Verfahren wird jedoch vorteilhafter Weise kontinuierlich durchgeführt. Diese Variante bietet neben der einfachen Handhabung im größeren Maßstab als weiteren Vorteil, daß gebildetes cyclisches Phosphazen ständig aus der Reaktionszone abgeführt wird und somit Nebenreaktionen des Produktes mit $RPCl_4$ vermindert werden und lineare polymere Phosphazene, wenn überhaupt, dann nur in geringen Mengen gebildet werden. Ganz allgemein liefert das erfindungsgemäße Verfahren einen hohen Anteil an cyclischen, insbesondere trimeren Phosphazenen und nur wenig Polymere.

Zur Aufarbeitung wird das Reaktionsgemisch abgekühlt und überschüssiges Ammoniumchlorid abfiltriert. Dieses kann nach Waschen mit Lösungsmittel z. B. zur Herstellung von Phosphornitrilchlorid eingesetzt werden. Anschließend kann vom Rohprodukt bei Normaldruck oder im Vakuum das Lösungsmittel abdestilliert werden. Das rohe Chlorphosphazen bleibt in hoher Reinheit zurück. Insbesondere das cyclische Dichlorphosphazen (R = Cl) kann direkt destilliert werden. Dabei ist es auch möglich, vor der Destillation schwer abtrennbare niedermolekulare Verunreinigungen wie $RPCl_4$ oder polymere Phosphazene nach dem Verfahren der US-PS 3 952 086 oder der EP-OS 4 878 mit Brönsted-Basen oder

Wasser zu zersetzen. Das trimere Dichlorphosphazen läßt sich besonders gut durch Destillation von den höheren cyclischen Bestandteilen abtrennen.

Selbstverständlich ist es auch möglich, anstatt $RPCl_4$ in den Reaktor zuzugeben, es in der Reaktionszone in an sich bekannter Weise durch Umsetzung von vorgelegtem $RPCl_2$ mit Chlor in situ herzustellen. Die Menge des erzeugten $RPCl_4$ läßt sich dabei leicht durch die eingeleitete Chlormenge steuern.

Die Erfindung wird durch die folgenden Beispiele näher erläutert.

## Beispiele

### Versuchsapparatur

Die verwendete Apparatur ist in der Figur dargestellt. Die 3 Doppelmantelgefäße (1), (2) und (3) sind zu einer Kaskade verbunden. Alle 3 Gefäße sind mit mechanischem Rührer (4, 4A, 4B), Thermometer (nicht gezeichnet) und Rückflußkühler (5A, 5B) ausgestattet, durch die überschüssiger bzw. freigesetzter Chlorwasserstoff entweichen kann. Der Rückflußkühler über Gefäß (1) ist nicht gezeichnet. Gefäße (1) und (3) besitzen ein Bodenauslaß-Ventil (10, 10B), Gefäß (2) einen Überlauf bei 50 % Füllstand. Das Volumen der Gefäße (1) und (3) beträgt 2 Liter, von Gefäß (2) 4 Liter. Gefäß (1) wird mit Wasser gekühlt, Gefäße (2) und (3) werden mit Öl beheizt. Gefäß (1) ist zusätzlich mit 2 Gaseinleitungsrohren (6) für Ammoniak und (7) für Chlorwasserstoff versehen, sowie mit einem Tropftrichter (8), durch den Lösungsmittel und gegebenenfalls organische Phosphorverbindung zugegeben werden, bzw. einen Stutzen (9) für die Zugabe von $PCl_5$ bzw. $RPCl_4$.

Zu Beginn der Reaktion wird Gefäß (1) mit einem Liter Chlorbenzol gefüllt. Unter Rühren und Kühlen wird durch gleichzeitiges Einleiten von Ammoniak und Chlorwasserstoff, welcher in geringem Überschuß vorhanden ist, eine Ammoniumchlorid-Suspension hergestellt. Man läßt etwa die Hälfte in (2) laufen und füllt (1) mit Chlorbenzol wieder auf 1,5 Liter auf.

Anschließend wird in (1) erneut Ammoniumchlorid hergestellt. Man versetzt mit $RPCl_4$ und, darauf bezogen, 0,5 bis 1 Gew.-% Magnesiumchlorid und füllt Chlorbenzol nach. Die Temperatur beträgt, bedingt durch die Bildung von Ammoniumchlorid, 40 bis 60°C.

Man läßt die Suspension kontinuierlich von (1) in (2) laufen. Gefäß (2) wird extrem geheizt. Die Zulaufgeschwindigkeit wird so geregelt, daß die Temperatur nicht unter 115°C abfällt. Mit weiterer Zugabe fließt die Suspension über den Überlauf in Gefäß (3). Hier beträgt die Reaktionstemperatur 129 bis 132°C. Von (3) wird kontinuierlich Produktmischung über Ventil 10 B abgelassen. Überschüssiges Ammoniumchlorid wird abfiltriert, Lösungsmittel im Vakuum abgezogen und das rohe cyclische Chlorphosphazen getrocknet.

Beispiel 1

Innerhalb 5,5 Stunden werden 4,26 kg $PCl_5$ mit 1,3 kg aus Ammoniak und Chlorwasserstoff hergestelltem Ammoniumchlorid in 10 Liter Chlorbenzol umgesetzt.
Man erhält nach Trocknung 2,33 kg Rohprodukt (98 % der Theorie). Das Produkt enthält 72 % $(NPCl_2)_3$, 14 % $(NPCl_2)_4$ sowie höhere cyclische Dichlorphosphazene.

Beispiel 2

Innerhalb 1,5 Stunden werden 1,87 kg $PCl_5$ mit 670 g aus Ammoniak und Chlorwasserstoff hergestelltem Ammoniumchlorid in 10 Liter Chlorbenzol umgesetzt.
Man erhält nach Trocknung 942 g Rohprodukt (90 % der Theorie). Das Produkt enthält 61 % $(NPCl_2)_3$, 11 % $(NPCl_2)_4$ sowie höhere cyclische Dichlorphosphazene.

Beispiel 3

Innerhalb von 3,7 Stunden werden 1,19 kg $CH_3PCl_4$ mit 546 g aus Ammoniak und Chlorwasserstoff hergestelltem Ammoniumchlorid in 5,1 Liter Chlorbenzol umgesetzt. Man erhält nach Filtration, Extraktion des Ammoniumchlorids mit Chlorbenzol und Abdestillieren des Lösungsmittels 601 g Rohprodukt.
Das Rohprodukt wird anschließend durch Destillation gereinigt. Man gewinnt 332 g oligomeres Methylchlorphosphazen mit Schp. 161 - 178° / 12 - 20 mbar sowie durch Extraktion des Destillationsrückstandes mit Chlorbenzol

149 g an höheren Methylchlorphosphazenen.

Beispiel 4

Innerhalb einer Stunde werden 370,7 g $C_6H_5PCl_4$ und 302 g aus Ammoniak und Chlorwasserstoff hergestelltem Ammoniumchlorid in 4 Liter Chlorbenzol in Gegenwart von 3 g Magnesiumchlorid umgesetzt.

Man erhält nach Trocknung 230,9 g Rohprodukt, das zu 22% cis-/trans- $(NPC_6H_5Cl)_3$ sowie höhere cyclische Phenylchlorphosphazene enthält.

Patentansprüche:

1. Verfahren zur Herstellung cyclischer Phosphazene der allgemeinen Formel

$$-\!\!\left(N = PClR\right)_n\!\!-$$

in der R Chlor, eine $C_1$- bis $C_6$-Alkylgruppe oder eine Phenylgruppe und n eine ganze Zahl zwischen 3 und 8 bedeutet, durch Umsetzung von Verbindungen der Formel $RPCl_4$, in der R die oben angegebene Bedeutung hat, mit einer Suspension von Ammoniumchlorid in einem inerten organischen Lösungsmittel in einem heißen Reaktor, wobei die Suspension von Ammoniumchlorid durch Einleiten von Chlorwasserstoff und Ammoniak in das für die Reaktion benutzte Lösungsmittel gewonnen wird und die Zugabe der Verbindung $RPCl_4$ in den heißen Reaktor nach Maßgabe des Verbrauchs erfolgt,
dadurch gekennzeichnet, daß die Suspension von Ammoniumchlorid nach Maßgabe des Verbrauchs von $RPCl_4$ in den heißen Reaktor eingeleitet wird.

2. Verfahren nach Anspruch 1, dadurch gekennzeichnet, daß zu jedem Zeitpunkt die insgesamt zugegebene molare Menge an Ammoniumchlorid mindestens das 1.0-fache der insgesamt zugegebenen molaren Menge an $RPCl_4$ beträgt und innerhalb eines beliebigen Zeitabschnitts, in dem ein Viertel der Gesamtmenge an $RPCl_4$ zugegeben wird, das Molverhältnis der in diesem Zeitabschnitt zugegebenen Mengen an Ammoniunchlorid und $RPCl_4$ nicht unter 0.5:1 liegt.

3. Verfahren nach Anspruch 2, dadurch gekennzeichnet, daß innerhalb eines beliebigen Zeitabschnitts, in dem ein Viertel der Gesamtmenge an $RPCl_4$ zugegeben wird, das Molverhältnis der in diesem Zeitabschnitt zugegebenen Mengen an Ammoniumchlorid und $RPCl_4$ nicht über 3,0:1 liegt.

4. Verfahren nach Anspruch 1, dadurch gekennzeichnet, daß R für eine Methylgruppe steht.

5. Verfahren nach Anspruch 1, dadurch gekennzeichnet, daß die $NH_4Cl$-Suspension in den heißen Reaktor weitgehend kontinuierlich eingeleitet wird, und nach Erreichen eines vorgegebenen Füllstandes der heiße Reaktor diskontinuierlich entleert wird.

6. Verfahren nach Anspruch 1, dadurch gekennzeichnet, daß die Zugabe von $RPCl_4$ ersetzt wird durch die Zugabe von stöchiometrischen Mengen an $RPCl_2$ und Chlor.

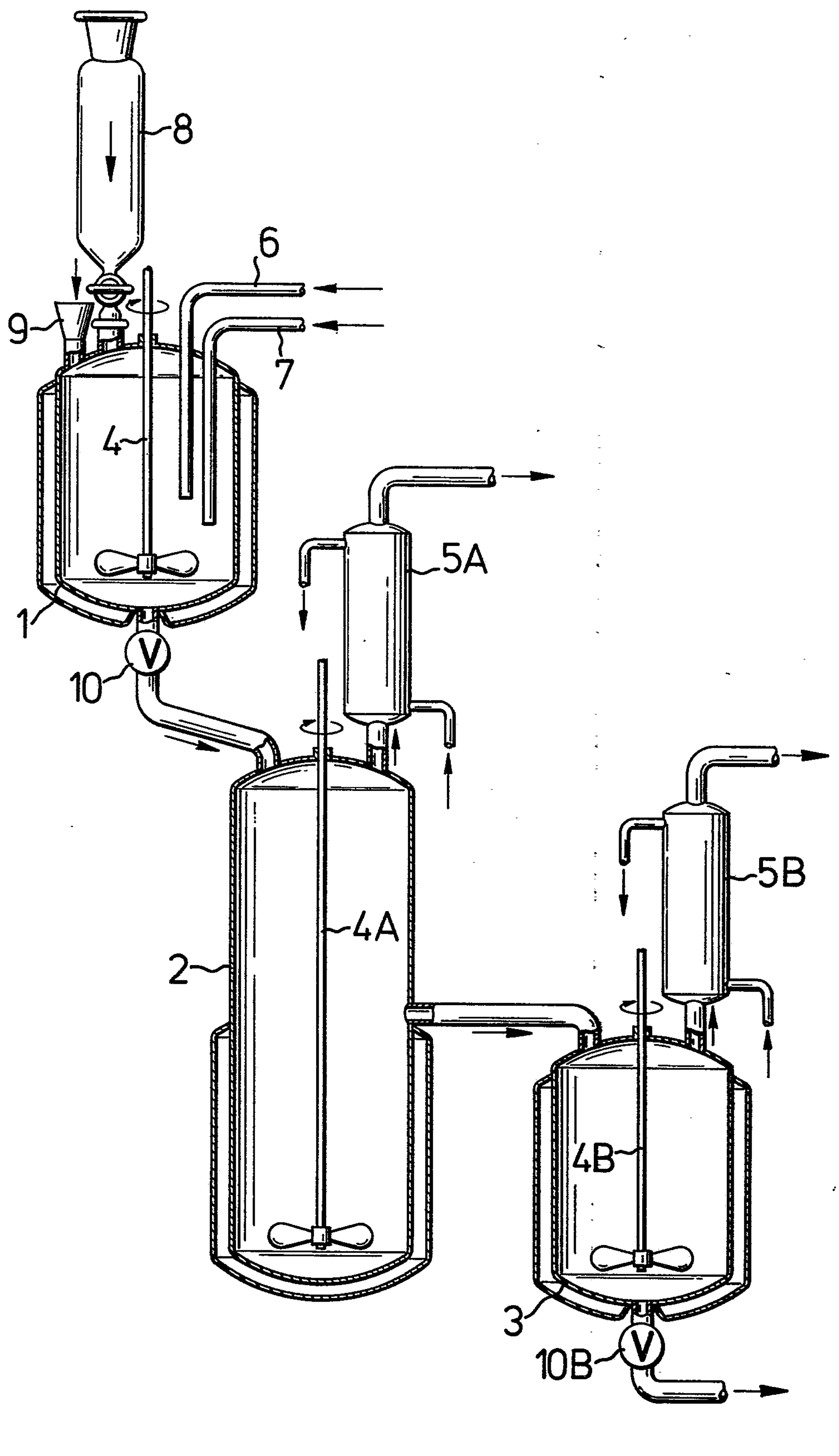
8
6
9
7
4
5A
1
10
4A
2
5B
4B
3
10B

Europäisches Patentamt

**EUROPÄISCHER RECHERCHENBERICHT**

0051804

Nummer der Anmeldung

EP 81 10 9099

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| DX | US - A - 4 046 857 (T.M. FEKETE)<br>* Insgesamt * | 1-6 | C 01 B 21/098<br>C 07 F 9/65 |
| | -- | | |
| X | US - A - 4 065 546 (J.T.K. KAO)<br>* Insgesamt * | 1-6 | |
| | -- | | |
| X | EP - A - 0 008 414 (ETHYL CORP.)<br>* Insgesamt * | 1-6 | |
| | -- | | RECHERCHIERTE SACHGEBIETE (Int. Cl.³) |
| X | FR - A - 2 316 241 (ETHYL CORP.)<br>* Insgesamt * | 1-6 | C 01 B 21/098<br>C 07 F 9/65 |
| | -- | | |
| DP | EP - A - 0 026 882 (HOECHST)<br>* Insgesamt * | 1-6 | |
| | -- | | |
| DA | GB - A - 1 026 369 (W.R. GRACE & CO.)<br>* Insgesamt * | 1-6 | |
| | ----- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-02-1982 | BESLIER |

EPA form 1503.1 06.78